# EUROPÄISCHE PATENTSCHRIFT

(11) **EP 1 629 935 B1**
(45) Veröffentlichungstag und Bekanntmachung des Hinweises auf die Patenterteilung: **31.10.2007**
(21) Anmeldenummer: 05107480.5
(22) Anmeldetag: 15.08.2005
(51) Int. Cl.: B23K 26/38, B23K 26/14, B23K 26/16

(54) **Laserbohrvorrichtung mit einer Strahldüse zur Erzeugung eines in Richtung der Bohrung strömenden Gasstrahles**
Laser drilling device with a beam nozzle for creating a flow of gas in direction of the hole to be created
Dispositif de perçage laser avec une buse pour créer un flux de gaz en direction du trou à percer

(30) Priorität: 23.08.2004 DE 102004041273
(43) Veröffentlichungstag der Anmeldung: 01.03.2006
(73) Patentinhaber: Alstom Technology Ltd, 5400 Baden (CH)
(72) Erfinder: Zeltner, Urs, 5012 Schönenwerd (CH)

(56) Entgegenhaltungen:
- EP-A- 0 713 745
- DE-A1- 19 848 152
- DE-U1- 8 337 305
- US-A- 4 090 572
- US-A- 5 609 781
- US-B1- 6 316 743

## Beschreibung

Die vorliegende Erfindung betrifft eine Laserbohrvorrichtung zum Einbringen einer Bohrung in ein Werkstück gemäß dem Oberbegriff des Anspruchs 1 (siehe, z.B., US-A-5 609 781).

### Stand der Technik

Um hochpräzise Bohrungen, insbesondere auch Bohrungen mit einem trichterförmigen Bohrungsaustritt herstellen zu können, werden zunehmend Bohrlaser verwendet. Ein derartiger Bohrlaser weist den Vorteil auf, schnell und hochflexibel arbeiten zu können, wobei sowohl Durchgangsbohrungen als auch trichterförmige Bohrungen hergestellt werden können. Desweiteren kann mittels des Bohrlasers auch ein keramikbeschichtetes Bauteil gebohrt werden. Im Vergleich zu herkömmlichen Bohrverfahren mit Spiralbohrern, fallen beim Laserbohren keine zusätzlichen Kosten für verschleißbehaftete Bohrer an, so dass das Laserbohren im Vergleich zum herkömmlichen Bohren kostengünstiger ausgeführt werden kann. Von weiterem großen Vorteil ist, dass das Laserbohren berührungslos erfolgt und im Vergleich zu herkömmlichen Bohrverfahren auch komplexe Formbohrungen ermöglicht.

Zum Einbringen der Bohrung in das Werkstück emittiert der Bohrlaser kurze hochfrequente Lichtpulse. Durch die hohe lokale Energie, die dabei aufgebracht wird, erfolgt der Materialabtrag bzw. die Bohrung durch schlagartige Verdampfung vorzugsweise unter Umgehung der schmelzflüssigen Phase.

Aus der US 6,316,743 B1 ist eine Bohrvorrichtung bekannt, welche mit einem Laserstrahl arbeitet und wobei eine Düseneinrichtung zur Erzeugung eines in Richtung der Bohrung strömenden und den Laserstrahl im wesentlichen koaxial ummantelnden Gasstrahles vorgesehen ist. Der Gasstrahl bläst dabei einerseits Schmelze aus der Bohrung und verhindert andererseits ein Zurückspritzen der Schmelze in Richtung der Bohrvorrichtung. Ein Durchmesser des Gasstrahls der Strahldüse ist an einer Bohrungsöffnung kleiner als ein Durchmesser der durch den Laserstrahl erzeugten Bohrung, da sowohl der Gasstrahl als auch der Laserstrahl zusammen in die Bohrungsöffnung eintreten können.

Aus der US 5,609,781 A und der DE 198 48 152 A1 sind ebenfalls Bohrvorrichtungen bekannt, welche einen Bohrlaser und eine Strahldüse aufweisen. Der Bohrlaser wird dabei zum Einbringen der Bohrung in das Werkstück eingesetzt, während die Strahldüse einen in Richtung der Bohrung strömenden und den Laserstrahl im wesentlichen koaxial ummantelnden Gasstrahl erzeugt.

Bei den bekannten Bohrlaser besteht jedoch oftmals die Gefahr, dass sich Schmelzreste bzw. Schlacke an einem Bohrlochrand ablagern und es dadurch zu einem sogenannten "Recasting" kommen kann. Die Ablagerung von Schmelz- bzw. Schlackereste am Bohrlochrand ist jedoch nicht erwünscht, da hierdurch die Qualität der Bohrung unter Umständen stark beeinträchtigt werden kann.

### Darstellung der Erfindung

Die vorliegende Erfindung beschäftigt sich mit Problem, für eine Laserbohrvorrichtung eingangs erwähnter Art eine verbesserte Ausführungsform anzugeben, mit welcher eine Bohrung mit hoher Qualität hergestellt werden kann.

Erfindungsgemäß wird diese Erfindung durch den Gegenstand des Anspruchs 1 gelöst. Vorteilhafte Ausführungsformen sind Gegenstand der abhängigen Ansprüche.

Die Erfindung beruht auf dem allgemeinen Gedanken, bei einer Laserbohrvorrichtung, die einen Bohrlaser zur Erzeugung eines Laserstrahls und eine Strahldüse zur Erzeugung eines in Richtung der Bohrung strömenden Gasstrahls aufweist, einen Durchmesser des Gasstrahls zumindest an einer Bohrungsöffnung kleiner als einen Durchmesser der durch den Laserstrahl erzeugten Bohrung zu halten. Von dem Bohrlaser wird dabei der zum Einbringen der Bohrung geeignete Laserstrahl erzeugt, welcher während des Bohrens vom Gasstrahl vorzugsweise koaxial ummantelt ist. Der Gasstrahl dient zum einen zum Ausblasen von Schmelze- bzw. Schlackenresten aus der Bohrung und zum anderen zum Schutz vor zurückspritzender Schmelze. Insbesondere das Zurückspritzen der Schmelze in Richtung der Laserbohrvorrichtung bzw. in Richtung einer Fokussiereinrichtung der Laserbohrvorrichtung muss vermieden werden, da hierdurch die Fokussiereinrichtung, beispielsweise eine Linse, verschmutzt bzw. beschädigt werden kann.

Durch den erfindungsgemäßen Gedanken, den Durchmesser des Gasstrahls kleiner zu halten als den Durchmesser der Bohrung wird erreicht, dass der Gasstrahl während des Bohrens ohne Berührung mit einem seitlichen Bohrlochrand in das Bohrloch hineinströmt und vorzugsweise entlang einer Bohrlochwandung wieder zur Bohrungsöffnung nach außen strömt und dabei Schmelze- bzw. Schlackereste aus dem Bohrloch herausbefördert. Da der Gasstrahl beim Einströmen in das Bohrloch nicht auf den Bohrlochrand trifft, kommt es in diesem Bereich einerseits nicht zu unerwünschten Verwirbelungen, die sog. Totwassergebiete entstehen lassen und in denen das Recasting stattfindet und andererseits auch nicht zu einem Zurückspritzen von Schmelze- bzw. Schlackeresten in Richtung der Laserbohrvorrichtung. Vielmehr werden nicht verdampfte Schlacke- bzw. Schmelzereste beim Ausblasen aus dem Bohrloch und beim Erreichen der Bohrlochöffnung radial vom Laserstrahl des Bohrlasers nach außen weggeblasen. Bei stark vergrößerter Betrachtung eines Schnittes durch das Bohrloch entsteht somit eine Gasströmung, welche im wesentlichen zentral des Bohrloches bis zu einem Bohrlochgrund in dieses hineinströmt und an dem Rand des Bohrloches wieder zurück zur Bohrlochöffnung herausströmt und dabei unerwünschte Bohrreste ins Freie befördert.

Dabei beträgt der Durchmesser des Gasstrahls zumindest an der Bohrungsöffnung ca. 65% bis 85% des Durchmessers der Bohrung. Der ungefähre Größenbereich des Durchmessers des Gasstrahls zeigt, dass dieser im Vergleich zum Bohrlochdurchmesser deutlich kleiner ist, so dass ein Auftreffen des Gasstrahls an einem Bohrlochrand und damit ein Verbleiben von Schmelze- bzw. Schlackeresten im Bohrloch vermieden werden kann. Bei einem Durchmesser des Gasstrahls von ca. 65 % des Durchmessers der Bohrung bleiben somit jeweils ca. 17,5 % des Durchmessers randseitig der Bohrung für einen dem Gasstrahl entgegenwirkenden Rückstrom aus dem Bohrloch zur Verfügung, so dass ein vorzugsweise zentrales Einströmen des Gasstrahls in die Bohrung und ein randseitiges Aufströmen bei gleichzeitigem Entfernen und Ausblasen von Schmelzeresten gewährleistet werden kann.

Erfindungsgemäß ist die Strahldüse als Laval-Düse ausgebildet oder weist wenigstens eine Laval-Düse auf. Eine Laval-Düse weist im allgemeinen eine strömungseingangsseitig zunächst abnehmende und danach wieder zunehmende Querschnittsfläche auf, wodurch erreicht werden kann, dass der Gasstrahl nach dem Austritt aus der Laval-Düse ein höhere Strahlgeschwindigkeit aufweist als beim Eintritt in dieselbe. Mit einer derartigen Laval-Düse ist es möglich eine mit Unterschallgeschwindigkeit eintretende Gasströmung auf Überschallgeschwindigkeit zu beschleunigen. Dabei können je nach Ausführungsform auch mehrere Strahldüsen bzw. Laval-Düsen ringförmig um den Laserstrahl angeordnet sein.

Zweckmäßig ist die Strahldüse so ausgebildet, dass sich der Gasstrahl zumindest bis zur Bohrungsöffnung kegelstumpfartig verjüngt. Eine derartige kegelstumpfartige Ausbildung des Gasstrahls verbessert ein Ausblasverhalten von Schlacke- bzw. Schmelzeresten aus der Bohrung, da insbesondere die ausgeblasenen Reststoffe beim Erreichen der Bohrungsöffnung radial nach außen vom Laserstrahl des Bohrlasers weggelenkt werden und dadurch ein Zurückspritzen der Schmelze in Richtung der Laserbohrvorrichtung besonders wirkungsvoll verhindert werden kann. Denkbar ist hierbei auch, dass die Strahldüse zusätzlich oder alternativ derart ausgebildet ist, dass sich der Gasstrahl zumindest bis zur Bohrungsöffnung im wesentlichen schraubenförmig um den Laserstrahl windet. Hierdurch kann erreicht werden, dass auch die Schlacke- bzw. Schmelzereste schraubenförmig aus der Bohrung ausgeblasen werden und aufgrund ihrer Fliehkraft beim Erreichen der Bohrungsöffnung radial weg vom Laserstrahl abgetrieben werden.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: einen Querschnitt durch einen erfindungsgemäßen Bohrlaser und eine von diesem gebohrte Bohrung,
- Fig. 2: einen Darstellung wie in Fig. 1, jedoch mit einem anderen Gasstrahlverlauf,
- Fig. 3: eine Darstellung wie in Fig. 1, jedoch mit einem anderen Bohrlaser und einem anderen Gasstrahlverlauf.

### Wege zur Ausführung der Erfindung

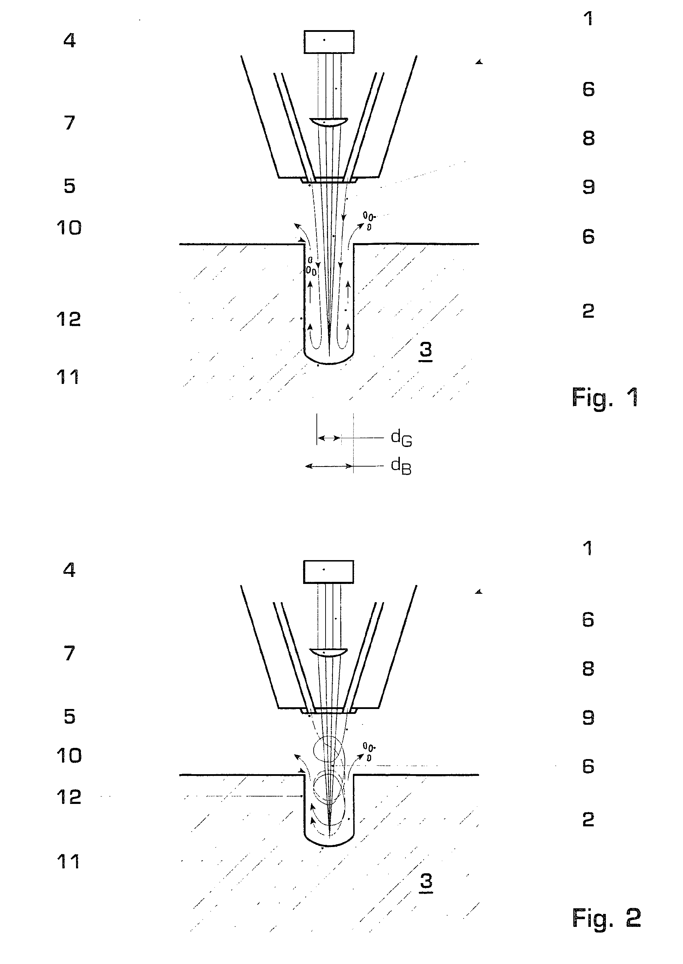

Entsprechend Fig. 1 weist eine erfindungsgemäße Bohrvorrichtung 1 zum Einbringen einer Bohrung 2 in ein Werkstück 3 einen Bohrlaser 4 sowie eine Strahldüse 5 auf. Eine derartige Bohrvorrichtung 1 wird beispielsweise zum Einbringen von Kühlluftbohrungen in Triebswerkschaufeln benutzt, wobei es generell möglich ist, sowohl zylindrische Bohrungen 2 als auch komplexe Formbohrungen, beispielsweise mit einer trichterförmigen Bohrungsöffnung 10, auszubilden. Derartige trichterförmige Bohrungsöffnungen 10 unterstützen die gleichmäßige Verteilung der aus den Bohrungen 2 tretenden Kühlluft und ermöglichen so eine gleichmäßige Filmkühlung der Turbinenschaufeln.

Die Bohrvorrichtung 1 weist eine schnelle Arbeitsweise sowie eine hohe Flexibilität auf. Darüber hinaus können auch keramikbeschichtete Bauteile, wie z.B. Turbinenschaufeln, bearbeitet werden. Da das Laserbohren allgemein berührungslos erfolgt, entstehen keine Werkzeugkosten hinsichtlich verschleißanfälliger Bohrer, wodurch der Bohrvorgang allgemein kostengünstiger ausgeführt werden kann.

Der Bohrlaser 4 erzeugt einen Laserstrahl 6, der zum Einbringen der Bohrung 2 in das Werkstück 3 geeignet ist. Der Laserstrahl 6 wird vor Ausstritt aus der Bohrvorrichtung 1 mittels einer Fokussiereinrichtung 7 gebündelt und dadurch stark konzentriert. Der eigentliche Bohrvorgang wird durch den konzentrierten Laserstrahl 6 erreicht, welcher aus hochfrequentem und gepulstem Licht besteht. Hierbei können Energien bis zu 50 Joule und Temperaturen von mehr als 16000 K entstehen.

Die Strahldüse 5 erzeugt einen in Richtung der Bohrung 2 strömenden und den Laserstrahl 6 koaxial ummantelten Gasstrahl 8, der zum einen Schmelze 9 aus der Bohrung 2 ausbläst und zum anderen ein Zurückspritzen der Schmelze 9 in Richtung der Bohrvorrichtung 1 verhindert. Der Gasstrahl 8 weist dabei beim Betrieb der Bohrvorrichtung 1 eine Strömungsgeschwindigkeit auf, welche die Schallgeschwindigkeit erreicht oder übersteigen kann.

Durch die erfindungsgemäße Lösung soll vor allem eine Bildung von Wirbeln vermieden werden, durch die Totwassergebiete an einer Wandung 12 der Bohrung 2 entstehen können und das sogenannte "Recasting", d.h. die Ablagerung von Schmelze 9, begünstigt wird. Um darüber hinaus ein möglichst effektives Ausblasen der Bohrung 2 sowie ein möglichst effektives Verhindern des Zurückspritzens der Schmelze 9 in Richtung der Bohrvorrichtung 1 zu bewirken, ist ein Durchmesser d_{G} des Gasstrahls 8 zumindest an der Bohrungsöffnung 10 kleiner als ein Durchmesser d_{B} der durch den Laserstrahl 6 erzeugten Bohrung 2. Das Durchmesser d_{G} des Gasstrahls 8 beträgt hierbei zumindest an der Bohrungsöffnung 10 ca. 65 bis 85 % des Durchmessers d_{B} der Bohrung 2.

Durch die Bedingung d_{G} < d_{B} wird erreicht, dass der Gasstrahl 8 beim Betrieb der Bohrvorrichtung 1 stets in der Bohrung 2 ein günstiges Strömungsfeld erzeugt, welches zum einen Reste der Schmelze 9 und/oder Schlackereste effektiv aus der Bohrung 2 ausbläst und zum andern gleichzeitig ein Zurückspringen der Schmelze 9 in Richtung der Bohrvorrichtung 1 verhindert.

Gemäß Fig. 1 tritt der Gasstrahl 8 in einem mittleren Bereich in die Bohrung 2 ein und wird an einem Boden 11 der Bohrung 2 nach außen an die jeweilige Wandung 12 der Bohrung 2 umgelenkt. An der Wandung 12 strömt nun der entgegengesetzt gerichtete Gasstrahl 8 in Richtung der Bohrungsöffnung 10 und nimmt dabei die Schmelze 9 mit nach außen. Beim Erreichen der Bohrungsöffnung 10 wird die aus der Bohrung 2 beförderte Schmelze 9 radial nach außen von dem Laserstrahl 6 wegbewegt, so dass sie nicht in Richtung der Bohrvorrichtung 1 gelangt und auch nicht beispielsweise die Fokussiereinrichtung 7 verschmutzt oder beschädigt. Eine Verwirbelung des Gasstrahls 8 sowie das Entstehen von den Recastingprozess begünstigenden Totwassergebieten kann dadurch vermieden werden.

Die Strahldüse 5 kann dabei so ausgebildet sein, dass sich der Gasstrahl 8 zumindest bis zur Bohrungsöffnung 10 kegelstumpfartig verjüngt (vgl. Fig. 1) oder dass sich der Gasstrahl 8 zumindest bis zur Bohrungsöffnung 10 im wesentlichen schraubenförmig um den Laserstrahl 6 windet (vgl. Fig. 2).

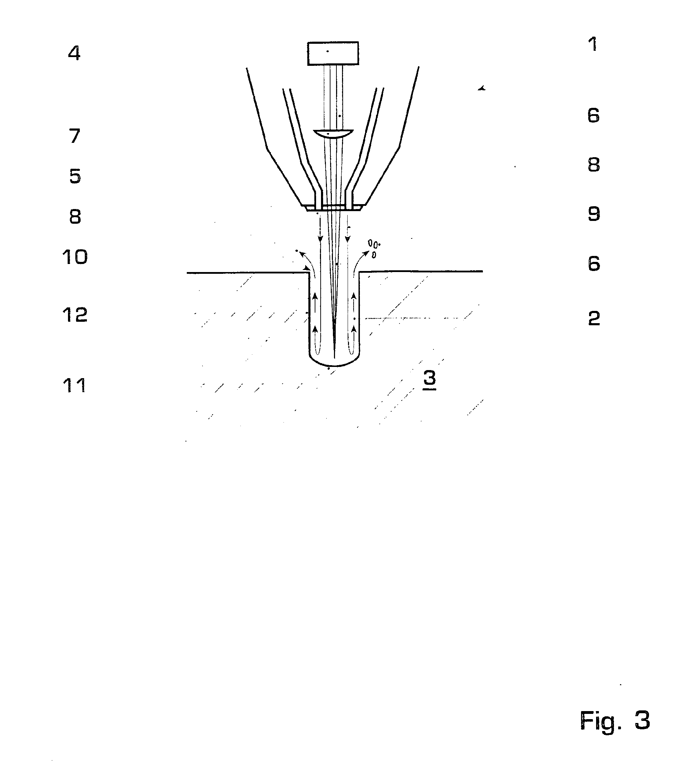

Bei der in Fig. 2 gezeigten Ausführungsform erzeugt der Gasstrahl 8 in der Bohrung 2 einen Wirbel, welcher Bohrreste, wie beispielsweise Schlacke oder Schmelze 9, aus der Bohrung 2 ausbläst. Hierbei erfährt die ausgeblasene Schmelze 9 eine Drallströmung, wodurch die radiale Wegbewegung vom Laserstrahl 6 nach dem Austritt aus der Bohrungsöffnung 10 durch die auftretenden Fliehkräfte verstärkt wird. Darüber hinaus ist auch eine Strahldüse 5 denkbar, bei welcher der Gasstrahl 8 zumindest bis zur Bohrungsöffnung 10 im wesentlichen parallel zum Laserstrahl 6 verläuft (vgl. Fig. 3).

Der Verlauf des Gasstrahls 8 bzw. die Ausbildung der Strahldüse 5 sind dabei rein exemplarisch zu sehen, so dass andere Verläufe des Gasstrahls 8 von der Erfindung mit umfasst sein sollen.

Gemäß der Erfindung ist die Strahldüse 5 als Laval-Düse ausgebildet oder weist wenigstens eine Laval-Düse auf. Eine Laval-Düse besteht bekannterweise aus einem konvergenten Teil, in welchem eine Unterschallbeströmung beschleunigt wird, und einem divergenten Teil, in dem dann die überschallschnelle Strömung expandieren und weiter beschleunigen kann. Denkbar ist hierbei auch, dass die Strahldüse 5 mehrere ringförmig um den Laserstrahl 6 angeordnet Laval-Düsen aufweist.

Ein Druck des Gasstrahls 8 kann während des Betriebs der Bohrvorrichtung 1 bis zu 220 bar betragen und dadurch eine besonders effektive Reinigung der Bohrung 2 bewirken.

Die erfindungsgemäße Bohrvorrichtung 1 bietet somit mehrere Vorteile: Zum einen wird vor allem eine Bildung von Wirbeln vermieden, durch die Totwassergebiete an einer Wandung 12 der Bohrung 2 entstehen können und das sogenannte "Recasting", d.h. die Ablagerung von Schmelze 9, begünstigt wird. Zum anderen wird durch den Gasstrahl 8 die Bohrung 2 während des Bohrvorgangs gereinigt, wodurch eine hohe Qualität der Bohrung 2 erzielt werden kann und gleichzeitig wird durch den Gasstrahl 8 ein Zurückspritzen von Schmelze 9 in Richtung der Bohrvorrichtung 1 bzw. der Fokussiereinrichtung 7 verhindert und dadurch diese vor Beschädigungen geschützt. Sowohl das verbesserte Ausblasen der Bohrung 2 ohne die Bildung von Totwassergebieten als auch der Schutz der Bohrvorrichtung 1 vor Zurückspritzen der Schmelze 9 wird dadurch erreicht, dass der Durchmesser d_{G} des Gasstrahls 8 zumindest an der Bohrungsöffnung 10 kleiner ist als der Durchmesser d_{B} der durch den Laserstrahl 6 erzeugten Bohrung 2. Ein Kontakt des Laserstrahls 6 mit der Wandung 12 der Bohrung 2 kann dadurch vermieden werden.

### Bezugszeichenliste

- 1: Bohrvorrichtung
- 2: Bohrung
- 3: Werkstück
- 4: Bohrlaser
- 5: Strahldüse
- 6: Laserstrahl
- 7: Fokussiereinrichtung
- 8: Gasstrahl
- 9: Schmelze
- 10: Bohrungsöffnung
- 11: Boden der Bohrung 2
- 12: Wandung der Bohrung 2

- d_{G}: Durchmesser des Gasstrahls 8 im Bereich der Bohrungsöffnung 10
- d_{B}: Durchmesser der Bohrung 2

## Patentansprüche

1. Laserbohrvorrichtung (1) zum Einbringen einer Bohrung (2) in ein Werkstück (3),
- mit einem Bohrlaser (4), der einen zum Einbringen der Bohrung (2) geeigneten Laserstrahl (6) erzeugt,
- mit einer Strahldüse (5) zur Erzeugung eines in Richtung der Bohrung (2) strömenden und den Laserstrahl (6) im wesentlichen koaxial ummantelnden Gasstrahls (8), der zum einen Schmelze (9) aus der Bohrung (2) ausbläst und zum anderen ein Zurückspritzen der Schmelze (9) in Richtung der Laserbohrvorrichtung (1) verhindert,
- wobei in der Benutzung der Lagsbohrvorrichtung ein Durchmesser (d_{G}) des Gasstrahls (8) zumindest an einer Bohrungsöffnung (10) kleiner ist als ein Durchmesser (d_{B}) der durch den Laserstrahl (6) erzeugten Bohrung (2),
- wobei in der Benutzung der Lagsbohrvorrichtung der Durchmesser (d_{G}) des Gasstrahls (8) zumindest an der Bohrungsöffnung (10) ca. 65% bis 85% des Durchmessers (d_{B}) der Bohrung (2) beträgt,
**dadurch gekennzeichnet,**
- **dass** die Strahldüse (5) als Laval-Düse ausgebildet ist oder wenigstens eine Laval-Düse aufweist, so dass der Gasstrahl (8) beim Betrieb der Laserbohrvorrichtung (1) eine Strömungsgeschwindigkeit aufweist, welche zumindest Schallgeschwindigkeit erreicht,
- **dass** der Bohrlaser (4) ein gepulster Laser ist.

2. Laserbohrvorrichtung nach Anspruch 1,
**dadurch gekennzeichnet,**
**dass** die Strahldüse (5) mehrere ringförmig um den Laserstrahl (6) angeordnete Laval-Düsen aufweist.

3. Laserbohrvorrichtung nach einem der Ansprüche 1 oder 2,
**dadurch gekennzeichnet,**
**dass** die Strahldüse (5) so ausgebildet ist, dass sich der Gasstrahl (8) zumindest bis zur Bohrungsöffnung (10) kegelstumpfartig verjüngt.

4. Laserbohrvorrichtung nach einem der Ansprüche 1 oder 2,
**dadurch gekennzeichnet,**
**dass** die Strahldüse (5) so ausgebildet ist, dass sich der Gasstrahl (8) zumindest bis zur Bohrungsöffnung (10) im wesentlichen schraubenförmig um den Laserstrahl windet.

5. Laserbohrvorrichtung nach einem der Ansprüche 1 oder 2,
**dadurch gekennzeichnet,**
**dass** die Strahldüse (5) so ausgebildet ist, dass der Gasstrahl (8) zumindest bis zur Bohrungsöffnung (10) im wesentlichen parallel zum Laserstrahl (6) verläuft.

6. Laserbohrvorrichtung nach einem der Ansprüche 1 bis 5,
**dadurch gekennzeichnet,**
**dass** ein Druck des Gasstrahls (8) bis zu 220 bar beträgt.

## Claims

1. Laser drilling device (1) for introducing a bore (2) into a workpiece (3),
- with a drilling laser (4) which generates a laser beam (6) suitable for introducing the bore (2),
- with a jet nozzle (5) for generating a gas jet (8) which flows in the direction of the bore (2) and envelops the laser beam (6) essentially coaxially and which, on the one hand, blows melt (9) out of the bore (2) and, on the other hand, prevents the melt (9) from splashing back in the direction of the laser drilling device (1),
- in the use of the laser drilling device a diameter (d_{G}) of the gas jet (8), at least at a bore orifice (10), being smaller than a diameter (d_{B}) of the bore (2) generated by the laser beam (6),
- in the use of the laser drilling device the diameter (d_{G}) of the gas jet (8), at least at the bore orifice (10), being approximately 65% to 85% of the diameter (d_{B}) of the bore (2),
**characterized**
- **in that** the jet nozzle (5) is designed as a Laval nozzle or has at least one Laval nozzle, so that, when the laser drilling device (1) is in operation, the gas jet (8) has a flow velocity which reaches at least sound velocity,
- **in that** the drilling laser (4) is a pulsed laser.

2. Laser drilling device according to Claim 1, **characterized in that** the jet nozzle (5) has a plurality of Laval nozzles arranged annularly around the laser beam (6).

3. Laser drilling device according to either one of Claims 1 and 2, **characterized in that** the jet nozzle (5) is designed such that the gas jet (8) tapers frustoconically at least as far as the bore orifice (10).

4. Laser drilling device according to either one of Claims 1 and 2, **characterized in that** the jet nozzle (5) is designed such that the gas jet (8), at least as far as the bore orifice (10), winds essentially helically around the laser beam.

5. Laser drilling device according to either one of Claims 1 and 2, **characterized in that** the jet nozzle (5) is designed such that the gas jet (8), at least as far as the bore orifice (10), runs essentially parallel to the laser beam (6).

6. Laser drilling device according to one of Claims 1 to 5, **characterized in that** a pressure of the gas jet (8) amounts to 220 bar.

## Revendications

1. Dispositif de perçage laser (1) pour pratiquer un perçage (2) dans une pièce (3),
- avec un laser de perçage (4) qui produit un faisceau laser (6) adapté pour pratiquer le perçage (2),
- avec une buse de pulvérisation (5) pour produire un jet de gaz (8) s'écoulant dans la direction du perçage (2) et enveloppant le faisceau laser (6) essentiellement coaxialement, qui évacue d'une part de la matière en fusion (9) hors du perçage (2) et qui empêche d'autre part un retour de la matière en fusion (9) dans la direction du dispositif de perçage laser (1),
- un diamètre (d_{G}) du jet de gaz (8) au moins au niveau d'une ouverture du perçage (10), au cours de l'utilisation du dispositif de perçage laser, étant inférieur à un diamètre (d_{B}) du perçage (2) produit par le faisceau laser (6),
- le diamètre (d_{G}) du jet de gaz (8) au moins au niveau de l'ouverture du perçage (10), au cours de l'utilisation du dispositif de perçage laser, étant compris entre environ 65% et 85% du diamètre (d_{B}) du perçage (2),
**caractérisé en ce que**
- la buse de pulvérisation (5) est réalisée sous la forme d'une buse de Laval ou présente au moins une buse de Laval, de telle sorte que le jet de gaz (8), lors du fonctionnement du dispositif de perçage laser (1), présente une vitesse d'écoulement qui atteint au moins la vitesse du son,
- et **en ce que** le laser de perçage (4) est un laser pulsé.

2. Dispositif de perçage laser selon la revendication 1,
**caractérisé en ce que**
la buse de pulvérisation (5) présente plusieurs buses de Laval disposées de manière annulaire autour du faisceau laser (6).

3. Dispositif de perçage laser selon l'une quelconque des revendications 1 ou 2,
**caractérisé en ce que**
la buse de pulvérisation (5) est réalisée de telle sorte que le jet de gaz (8) se rétrécisse sous forme tronconique au moins jusqu'à l'ouverture du perçage (10).

4. Dispositif de perçage laser selon l'une quelconque des revendications 1 ou 2,
**caractérisé en ce que**
la buse de pulvérisation (5) est réalisée de telle sorte que le jet de gaz (8) s'enroule essentiellement en forme d'hélice autour du faisceau laser au moins jusqu'à l'ouverture du perçage (10).

5. Dispositif de perçage laser selon l'une quelconque des revendications 1 ou 2,
**caractérisé en ce que**
la buse de pulvérisation (5) est réalisée de telle sorte que le jet de gaz (8) s'étend essentiellement parallèlement au faisceau laser (6) au moins jusqu'à l'ouverture du perçage (10).

6. Dispositif de perçage laser selon l'une quelconque des revendications 1 à 5,
**caractérisé en ce**
**qu'**une pression du jet de gaz (8) va jusqu'à 220 bars.
